# EUROPEAN PATENT SPECIFICATION

(11) **EP 2 838 404 B1**
(45) Date of publication and mention of the grant of the patent: **02.12.2015**
(21) Application number: 13736827.0
(22) Date of filing: 02.07.2013
(51) Int. Cl.: A47J 31/06, A47J 31/44, B65D 85/804

(54) **CAPSULE RECOGNITION SYSTEM**
KAPSELERKENNUNGSSYSTEM
SYSTÈME DE RECONNAISSANCE DE CAPSULE

(30) Priority: 06.07.2012 EP 12175405; 06.07.2012 EP 12175406; 21.03.2013 EP 13160328; 21.03.2013 EP 13160324; 21.03.2013 EP 13160325; 21.03.2013 EP 13160326; 21.03.2013 EP 13160342
(43) Date of publication of application: 25.02.2015
(60) Divisional application: 15188010.1
(73) Proprietor: Unilever PLC, London, EC4Y 0DY (GB); Unilever N.V., 3013 AL Rotterdam (NL)
(72) Inventor: CROSS, David, Murray, Melbourn Hertfordshire SG8 6PD (GB); PATON, Michael, Melbourn Hertfordshire SG8 6PD (GB); SMITH, Alistair, David, Bedford Bedfordshire MK44 1LQ (GB); TOON, Daniel, Thomas, Melbourn Hertfordshire SG8 6PD (GB); WALTER, Daniel, Mark, Bedford Bedfordshire MK44 1LQ (GB)
(74) Representative: Keenan, Robert Daniel
(86) International application number: PCT/EP2013/063950
(87) International publication number: WO 2014/006054

(56) References cited:
- EP-A1- 0 455 337
- WO-A1-2012/010317
- AT-B1- 511 357
- DE-U1-202012 104 474

## Description

### TECHNICAL FIELD OF THE INVENTION

The present invention relates to a recognition system for a capsule. In particular the invention relates to a coding system which allows the recognition of a capsule, for example in a beverage production machine.

### BACKGROUND OF THE INVENTION

Automated beverage production machines which are designed to use portioned ingredients are already known. Often such machines use capsules containing a predetermined dose of beverage ingredient (e.g. ground coffee, cocoa powder, tea leaves). Such capsules are convenient to use and can facilitate the preparation of beverages that are consistent in terms of taste and quality.

The working parameters of beverage production machines may need to be varied according to the type of beverage being prepared. Several systems for identifying such capsules in order to control parameters in the beverage production machine have been proposed.

For example, international patent applications WO 2011/000723 and WO 2011/000724 (Nestec S.A.) describe beverage capsules comprising an identifier and a method for identifying such capsules in a beverage producing device. The identifier, which is preferably embedded within a beverage capsule, comprises a magnetically-responsive material endosed in a plastic sheath. The magnetically-responsive material is capable of altering the voltage magnetic signal by producing at least one Barkhausen jump when excited by a magnetic field provided by an electromagnetic emitter. The composition of the magnetically-responsive material differs for each type of capsule but is identical for capsules of the same type. Hence the type of capsule can identified according to the alteration provided to the magnetic signal (e.g. by comparison with a number of reference magnetic patterns).

European patent application EP 0 451 980 (Kraft General Foods Limited) relates to packages containing comestibles for the preparation of beverages, which are preferably provided with a recognition means. Several possible systems are postulated, each comprising a particular recognition means and appropriate sensor. For example, the recognition means may comprise one or more surface features formed in the body of the package which can be identified by a mechanical sensor or an optical sensor; one or more strips of a magnetic material applied to the body of the package which can be read by an appropriate magnetic sensor; one or more shaped or divided areas of metal foil applied to the package body which cause an inductive effect on movement of the package in the machine, which inductive effect can be sensed; or one or more electrically conductive areas formed on the body of the package which can be sensed electronically.

International patent application WO 2011/141532 (Nestec S.A.) describes a capsule, system and method for preparing a beverage by centrifugation. The capsule comprises a code arranged to be read while the capsule is rotated around an axis of rotation traversing the capsule. Optical reading of a code that has been applied on the capsule by printing, embossing or Laser engraving is preferred. Inductive sensing of a code formed by reliefs or recesses provided on a circumferential metal rim of the capsule is also disclosed.

DE 20 2012 104 474 U1, WO 2012/010317A1, AT 511 357 B1 and EP 0455 337 A1 furthermore disclose capsules and identifying methods.

A problem with identifying a capsule in a beverage production machine is that retrieving or reading information from the capsule is not always reliable or convenient. For example, it is often necessary to use a coding system with a high level of redundancy in order to ensure that the capsule can be read in any orientation and/or in situations wherein the environment around the capsule is not clean (e.g. due to the presence of residual beverage material).

### TESTS AND DEFINITIONS

As used herein the term "comprising" encompasses the terms "consisting essentially of" and "consisting of". All percentages and ratios contained herein are calculated by weight unless otherwise indicated. It should be noted that in specifying any range of values or amount, any particular upper value or amount can be associated with any particular lower value or amount.

The disclosure of the invention as found herein is to be considered to cover all embodiments as found in the claims as being multiply dependent upon each other irrespective of the fact that claims may be found with multiple dependency or redundancy.

### Beverage

As used herein the term "beverage" refers to a substantially aqueous drinkable composition suitable for human consumption. Preferably the beverage comprises at least 85% water by weight of the beverage, more preferably at least 90% and most preferably from 95 to 99.9%.

### Beverage ingredient

As used herein the term "beverage ingredient" refers to a food-grade substance than can be used to produce a beverage. Typically such an ingredient will be mixed with a liquid, preferably an aqueous liquid, in order to produce a beverage (e.g. by steeping, soaking, dissolution and/or suspension).

An "infusible beverage ingredient" refers to a beverage ingredient that when steeped or soaked in an aqueous liquid releases certain soluble substances into the liquid, e.g. flavour and/or aroma molecules. Preferred examples of infusible beverage ingredients are tea plant material, herb plant material and/or fruit pieces. Preferably the infusible beverage ingredient will be dried and have a moisture content of less than 30 wt %, preferably less than 20 wt % and most preferably from 0.1 to 10 wt %.

### SUMMARY OF THE INVENTION

In a first aspect, the present invention relates to a capsule for a beverage production machine . as set out in claim 1.

The key to the present invention is the simplicity and reliability of the coding system. This permits recognition of the capsule over a wide range of tolerances without the need to build redundancy into the coding system and/or reduces the proportion of capsules rejected as void during the manufacturing process. The simplicity and reliability of the coding system is possible because the orientation member ensures that the capsule can only be aligned within the beverage production machine in one of a limited number of fixed orientations.

In a further aspect, the present invention relates to a method of recognising a capsule in a beverage production machine, the method comprising:
- providing a capsule comprising:
   - an ingredient endosed within the capsule;
   - an identifier, wherein the identifier is an area of conductive material incorporating a code pattern, the code pattern consisting of a predetermined arrangement of one or more discontinuities formed in the conductive material; and
   - an orientation member for directing the alignment of the capsule within the beverage production machine;
- applying an alternating current to a coil, the coil being positioned in the beverage production machine such that it generates eddy currents within the identifier;
- detecting a change in coil impedance;
- generating a signal indicative of the change in coil impedance; and
- identifying the capsule according to the signal.

This method provides a simple system for recognising a capsule within a beverage production machine. Such a system can have reduced complexity (e.g. by comprising fewer components) and/or be more economic to manufacture. This permits one or more working parameter of the beverage production machine to be varied according to the identity of the capsule, ultimately enabling a single beverage production machine to prepare a number of different beverages, each requiring distinct preparation conditions.

### DETAILED DESCRIPTION

The present invention relates to a capsule for a beverage production machine. The capsule encloses an ingredient. Preferably this will be a beverage ingredient, although embodiments in which the capsule encloses a deaning substance are also envisaged. Most preferably, the beverage ingredient comprises an infusible beverage ingredient (e.g. leaf tea).

The capsule can be of any suitable design. In order to facilitate efficient and cost-effective manufacture, it is preferred that the capsule is formed by injection moulding or by thermoforming. Preferably the capsule comprises a body part and a lid part, the lid part being attached to the body part so as to enclose the ingredient within the capsule. In this embodiment, the body part is preferably formed by injection moulding or by thermoforming, and the ingredient is subsequently endosed within the capsule by attaching the lid part to the body part. In a particularly preferred embodiment, the body part comprises a rim, and the lid part is attached to the body part around the rim, e.g. by heat-sealing.

The capsule comprises an orientation member for directing the alignment of the capsule within the beverage production machine. The orientation member ensures that the capsule will be aligned within the beverage production machine in any one of n fixed orientations, wherein n is an integer. Preferably n is 1, 2, 3, 4, 5 or 6, more preferably n is 1, 2, 3 or 4, still more preferably n is 1 or 2 and most preferably n is 2. In certain preferred embodiments the capsule comprises a plurality of orientation members.

It is preferred that the orientation member(s) are integrally formed as part of the body part, more preferably as part of the rim. For example, the capsule base and/or rim may have fulcrum detents and/or protrusions of the rim perimeter to ensure that the capsule will be held any one of n fixed orientations within the beverage production machine.

In order to direct the alignment of the capsule holder within the beverage production machine, the beverage production machine comprises a capsule holder which can interact with the orientation member(s). For example, in embodiments wherein the orientation member is a protrusion, the capsule holder preferably comprises a corresponding recess adapted to receive the protrusion. Similarly, in embodiments wherein the orientation member is a recess, then the capsule holder preferably comprises a corresponding protrusion adapted to engage with the recess. An advantage of such arrangements is that the capsule is held in a fixed position within the beverage production machine. This ensures that the capsule is stationary during reading of the code pattern.

It should be noted that the orientation member is not necessarily a protrusion or an indent. In certain preferred embodiments the orientation member can consist of the shape of the capsule itself, wherein the shape of the capsule is adapted so as to limit the number of orientations of the capsule within the beverage production machine. This is most preferably achieved by providing a capsule wherein the base part is shaped such that it has a limited degree of rotational symmetry. For example, the capsule can be shaped such that the base part has 60° rotational symmetry (e.g. a substantially hexagonal base part), 72° rotational symmetry (e.g. a substantially pentagonal base part), 90° rotational symmetry (e.g. a substantially square base part), 120° rotational symmetry (e.g. a substantially triangular base portion), or 180° rotational symmetry (e.g. a substantially oval or substantially rectangular base portion).

In embodiments wherein the orientation member consists of the shape of the capsule, the capsule holder is adapted accordingly to ensure that it interacts with the shaped capsule and holds it in a stationary position within the beverage production machine (e.g. by preventing rotation of the capsule once it has been inserted therein). For example, if the base part of the capsule is substantially hexagonal in shape, the capsule holder will be adapted to receive such a capsule (preferably by providing the capsule holder with a substantially hexagonal recess, the recess being adapted to receive the substantially hexagonal capsule base).

The capsule comprises an identifier. The identifier is an area of conductive material incorporating a code pattern. The code pattern consists of a predetermined arrangement of one or more discontinuities formed in the conductive material. This coding system permits machine reading of the capsule, e.g. by a beverage production machine. Machine reading is also useful during capsule manufacture, particularly in relation to selection and/or packaging of the capsules.

The identifier may comprise any conductive material. Preferred examples of conductive materials include metallic foils, conductive inks and wire loops. In a particularly preferred embodiment the conductive material is metallic foil. In this embodiment the foil may be of any thickness, although metallic foil having a thickness of 10 to 100 µm is particularly preferred.

In certain preferred embodiments the capsule comprises a plurality of identifiers. The identifier(s) are arranged so as to enable detection of the capsule in any one of the fixed orientations dictated by the orientation member(s). In a preferred embodiment the capsule comprises a plurality of identifiers which are coded independently of one another.

The identifier(s) can be incorporated into the lid part or the base of the capsule or applied to the capsule as a label. For convenience of manufacture it is preferred that the lid part comprises the identifier(s). The code pattern can be located anywhere on the lid part. In a preferred embodiment each identifier is located towards the periphery of the lid part.

As described above, in certain embodiments the body part comprises a rim and the lid part is preferably attached to the body part around the rim. As such, the lid part consists of a peripheral rim portion and a central lidding portion. In these embodiments, is preferred that each identifier incorporated in the lid part. Preferably each identifier is located at least partially on the peripheral rim portion in order to minimise the likelihood of damaging the identifier during packaging and transport of the capsule. More preferably, each identifier is located wholly on the peripheral rim portion. However, it should be noted that it is also possible to locate the identifier wholly or partially on the central lidding portion, especially if the ingredient endosed within the capsule is not air-sensitive.

In embodiments in which the lid part comprises the identifier(s), the lid part preferably comprises metallic foil, more preferably the lid part is a polymer/metallic foil laminate, most preferably a polymer/aluminium foil laminate. It is not necessary for the foil to be smooth prior to the incorporation of the code pattern. In fact, in order to allow sealing of the lid part to the body part to be controlled (e.g. in terms of seal strength), it is preferred that the foil is embossed.

It is preferred that the identifiers are arranged symmetrically. In particular, it is preferred that the identifiers have rotational symmetry. For example, the identifiers preferably have 60°, 72° 90°, 120° or 180° rotational symmetry, more preferably 90°, 120° or 180° rotational symmetry, most preferably 180° rotational symmetry.

Recognition of the capsule is based on the principle of electromagnetic induction and metal detection. A coil carrying an alternating current and located close to the identifier induces eddy currents in the conductive material. The eddy currents produce an opposing electromagnetic flux that changes the impedance of the coil. The change in impedance is a function of the strength and freedom of the eddy currents to circulate in the conductive material.

Code patterns incorporated in the conductive material comprise discontinuities that constrain and weaken the strength of the eddy currents, and thereby affect the impedance of the coil. An electronic detection system (also referred to as an eddy current sensor) monitors the change in coil impedance in order to derive a signal. Further characteristics of the signal may be extracted by electronic and/or software processing. The processed signal can be associated with valid code patterns or invalid code patterns. For example, a valid code pattern may verify the integrity of the capsule or identify the capsule type (e.g. beverage variety, deaning capsule), whereas an invalid code pattern can signify a void pattern, capsule reuse or simply that no capsule is present.

Each coil is excited with an alternating current (e.g. 10mA, ∼200kHz, and possibly phased/pulsed to avoid cross coupled interference). Although the diameter of the coil is not critical, it is preferably no more than 10 mm, more preferably no more than 8 mm. In one embodiment, the coil is configured in an electronic bridge circuit and the detection circuit includes an alternating waveform generator (oscillator, processor output etc), amplifier, filter, and further signal conditioning.

An advantage of this method of detection is that the coil and the eddy current sensor do not need to be in contact with the code pattern. This means that the recognition system works even if there is water and/or residual beverage ingredient between the coil and the code pattern. In order to ensure good signal differentiation, it is preferred that the coil and the code pattern are separated by a distance of 0 to 3 mm, more preferably 0 to 2 mm.

In order to function over a wide range of tolerances, it is preferable to have a low number of code patterns per coil and coarse pattern resolution. For example, 2 coils, each sensing 4 patterns per coil (A, B, C, D) provide 10 identification codes. This is sufficient to encode 9 different sets of machine parameters (e.g. 9 different brewing cycles and 1 deaning cycle). In order to facilitate detection by a system comprising 2 coils, the code pattern is preferably symmetrical, and more preferably the code pattern has 180° rotational symmetry. The orientation member(s) in such an embodiment preferably ensure that the capsule will be aligned within the beverage production machine in either one of two possible orientations, wherein these orientations also have 180° rotational symmetry.

It should be noted that the code pattern does need to be exposed on the surface of the capsule. For example, the code pattern could be covered by a laminate. The laminate can be any material that does not support eddy currents. In order to protect the code pattern (e.g. during packaging of the capsule), it is preferred that the code pattern is wholly or partially covered by a layer of non-conductive material.

In a further aspect, the present invention relates to a method of recognising the capsule in a beverage production machine. The method comprises:
- applying an alternating current to a coil, the coil being positioned in the beverage production machine such that it generates eddy currents within the identifier;
- detecting a change in coil impedance;
- generating a signal indicative of the change in coil impedance; and
- identifying the capsule according to the signal.

This method enables a single beverage production machine to prepare a number of different beverages which require different preparation conditions. In a preferred embodiment, the capsule is identified by comparing the signal with a number of reference signals, each one corresponding to a certain type of capsule.

It is particularly preferred that identification of the capsule controls at least one parameter of the beverage production machine. For example, the at least one parameter can include modulating one or more of: temperature, pressure, volume and/or flow rate of a brewing liquid (which is preferably water). Additionally or alternatively, the at least one parameter can be air pressure or brewing time. It is also envisaged that identification of the capsule can determine which path(s) the brewing liquid follows within the beverage production machine.

The identifier and the coil are preferably stationary with respect to one another whilst the alternating current is being applied to the coil. This arrangement allows the capsule to be identified without requiring the capsule to be in motion. This reduces the time required to identify the capsule and/or increases the accuracy of the identification.

From the standpoint of hygiene, it is preferable that the capsules are disposable. In order to prevent capsule re-use, it is preferred that the code pattern is destroyed once the capsule has been identified. For example, destruction of the code pattern may be achieved by piercing the identifier(s).

### FIGURES

By way of example, certain embodiments of the invention are illustrated by the figures, in which:
Figures 1 a to 1 c show a series of views of a capsule according to an embodiment of the invention.
Figure 2 shows a cross-sectional side view of the capsule of Figure 1 in a preferred reading mode.
Figure 3 is a schematic diagram showing basic components of a beverage production machine.
Figures 4a to 4j illustrate a series of capsules according to an embodiment of the invention viewed from above, wherein each capsule is encoded with one of 10 possible identification codes.
Figures 5a to 5j illustrate a series of capsules according to an alternative embodiment of the invention viewed from above.
Figure 6 illustrates a number of identifiers, wherein each identifier incorporates a possible code pattern.

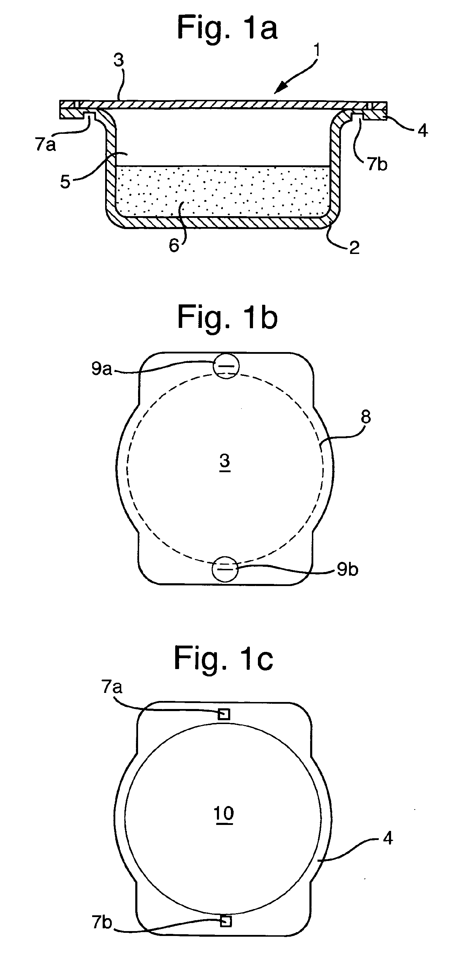

Figures 1a to 1c show three different views of a capsule 1 for a beverage production machine according to an embodiment of the invention.

Figure 1 a is a cross-sectional side view of a capsule 1 comprising a body part 2 and a lid part **3.** The lid part **3** is attached to the body part **2** around a flange-like rim **4.** The body part **2** defines a compartment **5** which encloses an ingredient **6.** The ingredient **6** is preferably a beverage ingredient, although it may also be a deaning ingredient. The lid part **3** is attached to the body part **2** around the rim **4,** thus sealing the ingredient **6** within the capsule **1.** The capsule **1** comprises two orientation members **7a, 7b** for directing the alignment of the capsule within the beverage production machine. In this embodiment, the orientation members **7a, 7b** are fulcrum detents integrally formed in the underside of the rim **4.**

Figure 1 b is a representation of the capsule of Figure 1 a viewed from above. In this embodiment the lid part **3** comprises perforations **8** along the inner edge of the rim **4** to facilitate release of the ingredient **6** from the capsule **1.** The lid part **3** comprises two identifiers **9a, 9b** which are arranged such that they have 180° rotational symmetry about a vertical axis through the centre of the capsule. Each identifier **9a, 9b** is an area of conductive material incorporating a code pattern. In this embodiment, the lid part **3** comprises a conductive material (e.g. metallic foil, preferably in the form of a polymer / aluminium foil laminate) and the code patterns are formed in the lid part 3.

Figure 1 c is a representation of the capsule of Figure 1 a viewed from below. The body part **2** has a circular base **10** and a flange-like rim **4.** As mentioned above, in this embodiment the orientation members **7a, 7b** are integrally formed within the underside of the rim **4.** In this embodiment, the orientation members **7a, 7b** are arranged in a symmetrical manner, however this is not necessarily the case and other embodiments are envisaged wherein the capsule comprises only a single orientation member or a plurality of orientation members arranged in a symmetrical or non-symmetrical manner.

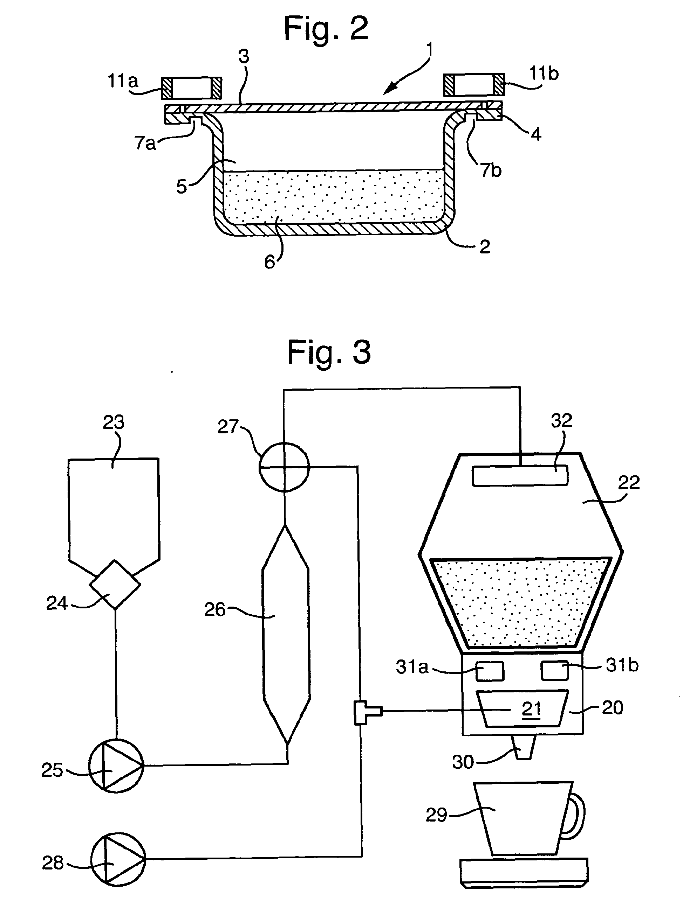

Figure 2 shows a cross-sectional side view of the capsule of Figure 1 in a preferred reading mode in the beverage production machine. In this embodiment, the capsule **1** comprises two orientation members **7a, 7b** configured such that the capsule can only be inserted into the beverage production machine in one of two orientations. The beverage production machine comprises two coils **11a, 11b.** On application of an alternating current to the coils eddy currents are generated in the conductive material. Each coil **11a, 11b** is positioned such these eddy currents are generated within one of the identifiers. This leads to a change in coil impedance. Each coil provides a signal indicative of this change in impedance, allowing the capsule to be identified according to the signal.

Figure 3 is a representation of the basic set up of a beverage production machine. The capsule **1, 21** of the present invention can be used in such a machine.

The beverage production machine comprises a capsule holder **20,** which can receive a capsule **21.** The capsule comprises one or more orientation members (not shown), and the capsule holder interacts with the orientation members so as to fix the position of the capsule within the beverage production machine (e.g. by preventing rotational movement of the capsule). The capsule additionally comprises one or more identifiers (not shown). Two coils **31a, 31b** are positioned in dose proximity (preferably 0 to 2 mm) to the identifiers. This arrangement facilitates recognition of the capsule as described above.

The beverage production machine preferably comprises a brewing chamber **22.** Water from a reservoir **23** is fed to the brewing chamber **22** via a water filter **24,** a water pump **25,** a heater **26** and a valve **27.** The valve **27** controls the route the water takes between the heater **25** and the brewing chamber **22.** In order to produce a beverage, water from the reservoir **23** preferably enters the brewing chamber **22** via the capsule **21.** An air pump **28** pumps air along with the water and thus facilitates the mixing of the capsule contents with the water. The beverage can subsequently be dispensed into a receptacle **29** (e.g. cup, mug) via a spout **30.** In order to rinse and/or dean the brewing chamber **22,** the valve **27** can re-direct the water such that it enters the brewing chamber **22** via a rinse head **32.**

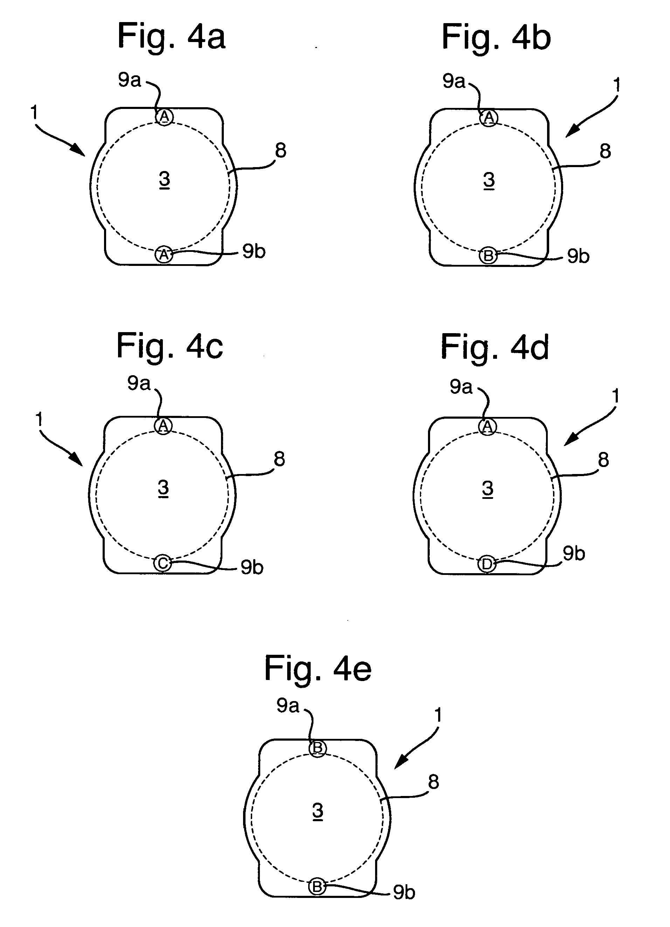

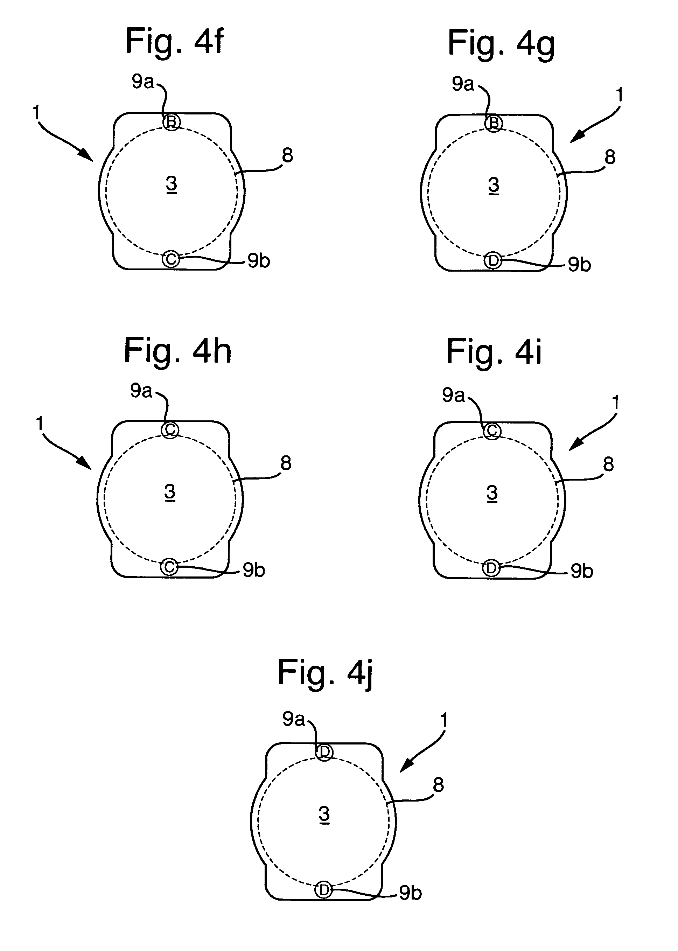

Figures 4a to 4j illustrate a series capsules according to an embodiment of the invention viewed from above. Each capsule **1** has a lid part **3** comprising two identifiers **9a, 9b** arranged so as to have 180° rotational symmetry, wherein each identifier **9a, 9b** is an area of conductive material incorporating one of four possible code patterns **A, B, C** or **D.** The capsule comprises orientation members **7a, 7b** configured such that the capsule can only be inserted into the beverage production machine in two orientations, and is designed to be read by a beverage production machine comprising two coils. Thus code pattern #1 (sensed by coil #1) can be **A, B, C** or **D** and code pattern # 2 (sensed by coil #2) can independently be **A, B, C** or **D.** Thus this embodiment is sufficient to encode 10 different identification codes, as summarised in Figures 4a to 4j and Table 1. Each identification code can be associated with a different set of machine parameters.

**Table 1**

| | **Code pattern #1** | | | | |
|---|---|---|---|---|---|
| **Code pattern #2** | | **A** | **B** | **C** | **D** |
| | **A** | Figure 4a | Figure 4b | Figure 4c | Figure 4d |
| | **B** | Figure 4b | Figure 4e | Figure 4f | Figure 4g |
| | **C** | Figure 4c | Figure 4f | Figure 4h | Figure 4i |
| | **D** | Figure 4d | Figure 4g | Figure 4i | Figure 4j |

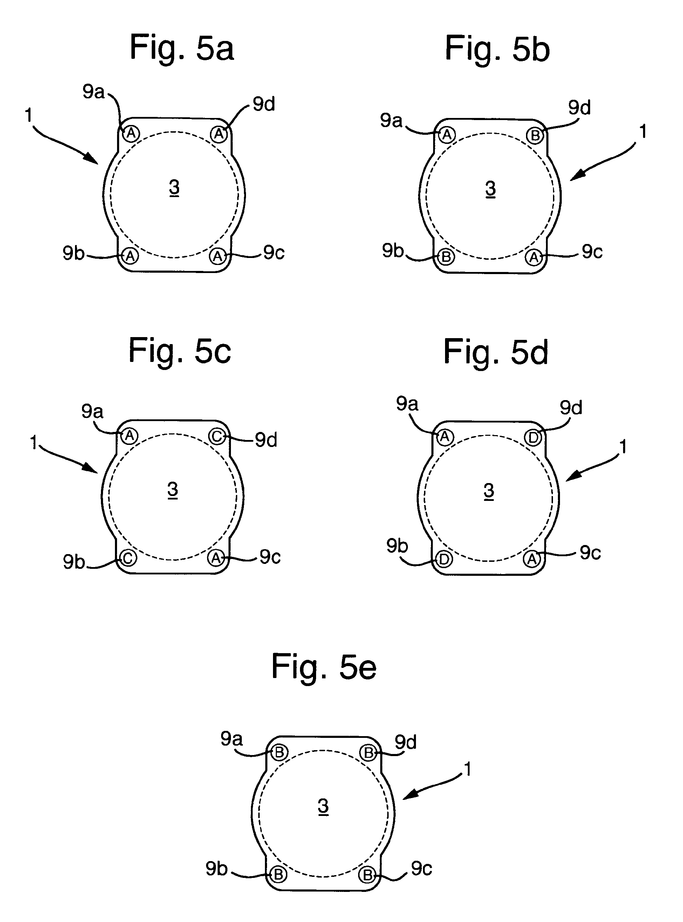

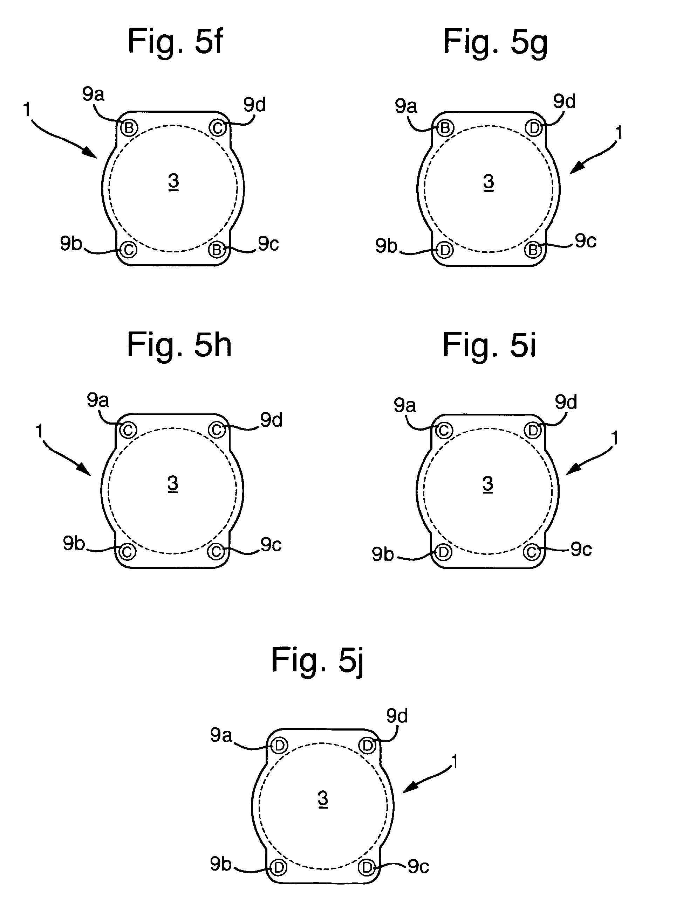

Figures 5a to 5j illustrate a series of capsules according to an alternative embodiment of the invention, wherein the identification codes again have 180° rotational symmetry. The capsules differ from those shown in Figures 4a to 4j in that each capsule **1** comprises four identifiers **9a, 9b, 9c, 9d.** Each identifier **9a, 9b, 9c, 9d** is an area of conductive material incorporating one of four possible code patterns **A, B, C** or **D.** The identifiers have 180° rotational symmetry, with identifier **9a** having the same code pattern as identifier **9c.** Similarly, identifier **9b** has the same code pattern as identifier **9d.** Nevertheless, each pair of identifiers **(9a, 9c; 9b, 9d)** is coded independently of the other pair. Thus this embodiment is sufficient to encode 10 different identification codes in a similar manner to Table 1, each of which can be associated with a different set of machine parameters.

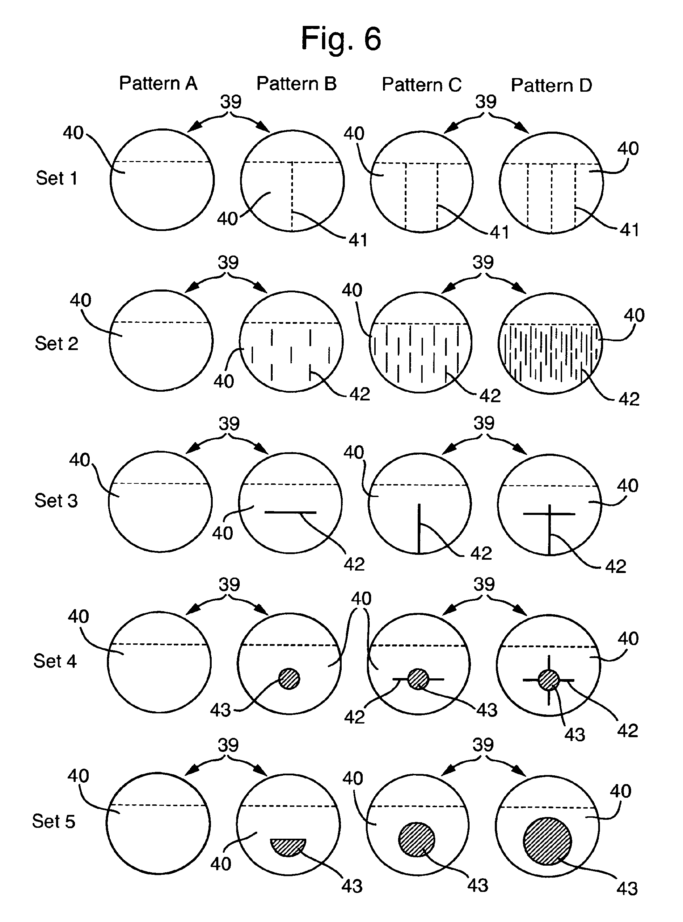

Figure 6 illustrates a number of identifiers **39,** wherein each identifier incorporates a possible code pattern. Each of the code patterns consist of a predetermined arrangement of one or more discontinuities formed in the conductive material **40.** The discontinuities are preferably perforations **41,** slits **42,** holes **43,** indentations (not shown), or a combination thereof.

For convenience, the code patterns are illustrated as 5 sets (set 1, set 2, set 3, set 4, set 5), with each set consisting of 4 code patterns (pattern A, pattern B, pattern C, pattern D). However, this is not meant to imply that these sets are in any way limiting. For example, a set of code patterns could be compiled by selecting all of patterns A, B, C and D from set 1, or by selecting patterns A from set 2, pattern B from set 3, pattern C from set 4 and pattern D from set 5. In fact any combination is possible, so long as each of pattern A, pattern B, pattern C and pattern D is associated with a unique and identifiable change in coil impedance.

## Claims

1. A capsule **(1, 21)** for a beverage production machine, the capsule **(1, 21)** comprising:
- an ingredient **(6)** enclosed within the capsule **(1, 21);** and
- a plurality of identifiers **(9a, 9b, 9c, 9d, 39);**
wherein the identifiers **(9a, 9b, 9c, 9d, 39)** are each areas of conductive material incorporating a code pattern, coded independently of one another, the code pattern consisting of a predetermined arrangement of one or more discontinuities **(41, 42, 43)** formed in the conductive material **(40),**
and wherein the capsule comprises at least one orientation member **(7a, 7b)** for directing the alignment of the capsule within the beverage production machine **characterized in that** the at least one orientation member **(7a, 7b)** directs the alignment of the capsule such that the capsule is aligned within the beverage production machine in any one of n fixed orientations, wherein n is 1, 2, 3, 4, 5 or 6,
the identifiers being arranged with rotational symmetry, so as to enable detection of the capsule in any one of the fixed orientations dictated by the at least one orientation member.

2. A capsule as claimed in claim 1 wherein the capsule comprises a body part **(2)** and the orientation member **(7a, 7b)** is integrally formed as part of the body part **(2).**

3. A capsule as claimed in claim 1 or claim 2 wherein the conductive material **(40)** is metallic foil, preferably having a thickness of 10 to 100 µm.

4. A capsule as claimed in claim 1 wherein the plurality of identifiers **(9a, 9b, 9c, 9d, 39)** are arranged so as to have 180° rotational symmetry.

5. A capsule as claimed in any one of the preceding claims wherein the capsule comprises a lid part **(3)** and the lid part **(3)** comprises the identifier(s) **(9a, 9b, 9c, 9d, 39).**

6. A capsule as claimed in any one of the preceding claims wherein the capsule encloses a beverage ingredient, preferably an infusible beverage ingredient

7. A capsule as claimed in any one of claims 1 to 5 wherein the capsule encloses a cleaning substance.

8. A capsule as claimed in any one of the preceding claims wherein the code pattern is wholly or partially covered by a layer of non-conductive material.

9. A method of recognising a capsule in a beverage production machine, the method comprising:
- providing a capsule (**1**, **21**) comprising:
• an ingredient **(6)** enclosed within the capsule;
• an identifier **(9a, 9b, 9c, 9d, 39),** wherein the identifier **(9a, 9b, 9c, 9d, 39)** is an area of conductive material incorporating a code pattern, the code pattern consisting of a predetermined arrangement of one or more discontinuities **(41, 42, 43)** formed in the conductive material **(40);** and
• an orientation member **(7a, 7b)** for directing the alignment of the capsule within the beverage production machine;
**characterized by**:
- applying an alternating current to a coil **(31 a, 31 b),** the coil **(31a, 31 b)** being positioned in the beverage production machine such that it generates eddy currents within the identifier **(9a, 9b, 9c, 9d, 39);**
- detecting a change in coil impedance;
- generating a signal indicative of the change in coil impedance; and
- identifying the capsule **(1, 21)** according to the signal.

10. A method as claimed in claim 9 wherein the capsule is identified by comparing the signal with a number of reference signals, each one corresponding to a certain type of capsule.

11. A method as claimed in claim 9 or claim 10 wherein identification of the capsule controls at least one parameter of the beverage production machine.

12. A method as claimed in any one of claims 9 to 11 wherein the identifier and the coil are stationary with respect to one another whilst the alternating current is applied to the coil.

13. A method as claimed in any one of claims 9 to 12 wherein the method subsequently comprises destruction of the code pattern.

## Patentansprüche

1. Kapsel (1, 21) für eine Maschine zur Zubereitung von Getränken, wobei die Kapsel (1, 21) Folgendes umfasst:
- einen Bestandteil (6), der in der Kapsel (1, 21) eingeschlossen ist; und
- eine Mehrzahl von Identifikatoren (9a, 9b, 9c, 9d, 39);
wobei es sich bei den Identifikatoren (9a, 9b, 9c, 9d, 39) jeweils um Bereiche aus einem leitenden Material, dem ein Kodierungsmuster einverleibt ist, handelt, wobei die Kodierungsmuster jeweils unabhängig voneinander kodiert sind und aus einer vorgegebenen Anordnung von einer oder mehreren Diskontinuitäten (41, 42, 43), die im leitenden Material (40) ausgebildet sind, bestehen,
und wobei die Kapsel mindestens ein Orientierungselement (7a, 7b) zum Dirigieren der Ausrichtung der Kapsel innerhalb der Maschine zur Zubereitung von Getränken umfasst,
**dadurch gekennzeichnet, dass** das mindestens eine Orientierungselement (7a, 7b) die Ausrichtung der Kapsel so dirigiert, dass die Kapsel innerhalb der Maschine zur Zubereitung von Getränken in einer beliebigen fixierten Orientierung von n fixierten Orientierungen ausgerichtet ist, wobei n den Wert 1, 2, 3, 4, 5 oder 6 hat,
wobei die Identifikatoren mit einer Rotationssymmetrie angeordnet sind, so dass eine Erfassung der Kapsel in einer beliebigen der fixierten Orientierungen, die durch das mindestens eine Orientierungselement festgelegt werden, ermöglicht wird.

2. Kapsel nach Anspruch 1, wobei die Kapsel einen Körperteil (2) umfasst und das Orientierungselement (7a, 7b) einstückig als ein Bestandteil des Körperteils (2) ausgebildet ist.

3. Kapsel nach Anspruch 1 oder 2, wobei das leitende Material (40) eine Metallfolie ist, die vorzugsweise eine Dicke von 10 bis 100 µm aufweist.

4. Kapsel nach Anspruch 1, wobei die Mehrzahl von Identifikatoren (9a, 9b, 9c, 9d, 39) so angeordnet ist, dass sie eine 180°-Rotationssymmetrie aufweisen.

5. Kapsel nach einem der vorstehenden Ansprüche, wobei die Kapsel einen Deckelteil (3) umfasst und der Deckelteil (3) den oder die Identifikatoren (9a, 9b, 9c, 9d, 39) umfasst.

6. Kapsel nach einem der vorstehenden Ansprüche, wobei die Kapsel einen Getränkebestandteil und vorzugsweise einen infundierbaren Getränkebestandteil einschließt.

7. Kapsel nach einem der Ansprüche 1 bis 5, wobei die Kapsel eine Reinigungssubstanz einschließt.

8. Kapsel nach einem der vorstehenden Ansprüche, wobei das Kodierungsmuster vollständig oder teilweise von einer Schicht aus einem nichtleitenden Material bedeckt ist.

9. Verfahren zur Erkennung einer Kapsel in einer Maschine zur Zubereitung von Getränken, wobei das Verfahren Folgendes umfasst:
- Bereitstellen einer Kapsel (1, 21), die Folgendes umfasst:
• einen in der Kapsel eingeschlossenen Bestandteil (6);
• einen Identifikator (9a, 9b, 9c, 9d, 39), wobei es sich beim Identifikator (9a, 9b, 9c, 9d, 39) um einen Bereich aus einem leitenden Material, dem ein Kodierungsmuster einverleibt ist, handelt, wobei das Kodierungsmuster aus einer vorgegebenen Anordnung von einer oder mehreren Diskontinuitäten (41, 42, 43) besteht, die im leitenden Material (40) ausgebildet sind; und
• ein Orientierungselement (7a, 7b) zum Dirigieren der Ausrichtung der Kapsel innerhalb der Maschine zur Zubereitung von Getränken;
**gekennzeichnet durch**:
- das Anlegen von Wechselstrom an eine Spule (31a, 31b), wobei die Spule (31a, 31b) in der Maschine zur Zubereitung von Getränken so angeordnet ist, dass sie Wirbelströme innerhalb des Identifikators (9a, 9b, 9c, 9d, 39) erzeugt;
- das Erfassen der Veränderung der Spulenimpedanz;
- das Erzeugen eines Signals, das eine Veränderung der Spulenimpedanz anzeigt; und
- das Identifizieren der Kapsel (1, 21) entsprechend dem Signal.

10. Verfahren nach Anspruch 9, wobei die Kapsel identifiziert wird, indem man das Signal mit einer Anzahl von Referenzsignalen vergleicht, die jeweils einem bestimmten Kapseltyp entsprechen.

11. Verfahren nach Anspruch 9 oder 10, wobei die Identifikation der Kapsel mindestens einen Parameter der Maschine zur Zubereitung von Getränken steuert.

12. Verfahren nach einem der Ansprüche 9 bis 11, wobei der Identifikator und die Spule in Bezug zueinander stationär sind, während der Wechselstrom an die Spule angelegt wird.

13. Verfahren nach einem der Ansprüche 9 bis 12, wobei das Verfahren anschließend die Zerstörung des Kodierungsmusters umfasst.

## Revendications

1. Capsule (1, 21) pour une machine de production de boisson, la capsule (1, 21) comprenant :
- un ingrédient (6) enfermé dans la capsule (1, 21) ; et
- plusieurs identifiants (9a, 9b, 9c, 9d, 39) ;
dans laquelle les identifiants (9a, 9b, 9c, 9d, 39) sont chacun des surfaces de matériau conducteur incorporant un motif de code, codés indépendamment les uns des autres, le motif de code étant constitué d'une disposition prédéterminée d'une ou plusieurs discontinuités (41, 42, 43) formées dans le matériau conducteur (40),
et dans laquelle la capsule comprend au moins un élément d'orientation (7a, 7b) pour diriger l'alignement de la capsule dans la machine de production de boisson,
**caractérisée en ce que** le au moins un élément d'orientation (7a, 7b) dirige l'alignement de la capsule de sorte que la capsule est alignée dans la machine de production de boisson dans l'une quelconque de n orientations fixées, où n est égal à 1, 2, 3, 4, 5 ou 6,
les identifiants étant disposés avec une symétrie de rotation afin de permettre une détection de la capsule dans l'une quelconque des orientations fixées dictées par le au moins un élément d'orientation.

2. Capsule selon la revendication 1, dans laquelle la capsule comprend une partie de corps (2) et l'élément d'orientation (7a, 7b) est formé intégralement comme une partie de la partie de corps (2).

3. Capsule selon la revendication 1 ou la revendication 2, dans laquelle le matériau conducteur (40) est une feuille métallique, ayant de préférence une épaisseur de 10 à 100 µm.

4. Capsule selon la revendication 1, dans laquelle les plusieurs identifiants (9a, 9b, 9c, 9d, 39) sont disposés afin de présenter une symétrie de rotation de 180 degrés.

5. Capsule selon l'une quelconque des revendications précédentes, dans laquelle la capsule comprend une partie de couvercle (3) et la partie de couvercle (3) comprend le(les) identifiant(s) (9a, 9b, 9c, 9d, 39).

6. Capsule selon l'une quelconque des revendications précédentes, dans laquelle la capsule comprend un ingrédient de boisson, de préférence un ingrédient de boisson pouvant infuser.

7. Capsule selon l'une quelconque des revendications 1 à 5, dans laquelle la capsule comprend une substance de nettoyage.

8. Capsule selon l'une quelconque des revendications précédentes, dans laquelle le motif de code est totalement ou partiellement recouvert par une couche de matériau non conducteur.

9. Procédé de reconnaissance d'une capsule dans une machine de production de boisson, le procédé comprenant :
- la fourniture d'une capsule (1, 21) comprenant :
▪ un ingrédient (6) enfermé dans la capsule ;
▪ un identifiant (9a, 9b, 9c, 9d, 39), dans lequel l'identifiant (9a, 9b, 9c, 9d, 39) est une surface de matériau conducteur incorporant un motif de code, le motif de code étant constitué d'une disposition prédéterminée d'une ou plusieurs discontinuités (41, 42, 43) formées dans le matériau conducteur (40) ; et
▪ un élément d'orientation (7a, 7b) pour diriger l'alignement de la capsule dans la machine de production de boisson ;
**caractérisé par** :
- une application d'un courant alternatif à une bobine (31a, 31b), la bobine (31a, 31b) étant disposée dans la machine de production de boisson de sorte qu'elle génère des courants parasites dans l'identifiant (9a, 9b, 9c, 9d, 39) ;
- une détection d'une modification de l'impédance de bobine ;
- une production d'un signal indiquant la modification d'impédance de bobine ; et
- une identification de la capsule (1, 21) selon le signal.

10. Procédé selon la revendication 9, dans lequel la capsule est identifiée en comparant le signal avec un nombre de signaux de référence, chacun correspondant à un certain type de capsule.

11. Procédé selon la revendication 9 ou la revendication 10, dans lequel une identification de la capsule contrôle au moins un paramètre de la machine de production de boisson.

12. Procédé selon l'une quelconque des revendications 9 à 11, dans lequel l'identifiant et la bobine sont stationnaires l'un par rapport à l'autre pendant que le courant alternatif est appliqué à la bobine.

13. Procédé selon l'une quelconque des revendications 9 à 12, dans lequel le procédé comprend ensuite la destruction du motif de code.
